# EUROPEAN PATENT APPLICATION

(11) **EP 1 990 690 A1**
(43) Date of publication of application: **12.11.2008**
(21) Application number: 07713995.4
(22) Date of filing: 09.02.2007
(51) Int. Cl.: G03G 15/08, C03C 17/32

(54) **ELECTRONIC PHOTOGRAPHY PRINTING APPARATUS, ELECTRONIC PHOTOGRAPHY PRINTING METHOD, AND SHEET GLASS MANUFACTURING METHOD**

(30) Priority: 10.02.2006 JP 2006033280
(71) Applicant: Mitsubishi Heavy Industries, Ltd., Tokyo 108-8215 (JP)
(72) Inventor: OKADA, Tomoaki, Hiroshima-shi, Hiroshima 7338553 (JP); KAWANAMI, Toshihiko, Mihara-shi, Hiroshima 7290393 (JP); FUJII, Tomohiro, Mihara-shi, Hiroshima 7290393 (JP)
(74) Representative: HOFFMANN EITLE
(86) International application number: PCT/JP2007/052339
(87) International publication number: WO 2007/091673

(57) **Abstract**

An electrographic printing apparatus and an electrographic printing method that prevent base fogging and maintain high quality are provided. The provided electrographic printing apparatus includes a OPC photoreceptor to which a developing device adheres charged toner to an image region of an electrostatic latent image formed on a moving surface; and a non-image-region toner removing device disposed downstream of the developing device in a moving direction of the surface of the OPC photoreceptor and at a position opposing the OPC photoreceptor, wherein the non-image-region toner removing device includes a removing roller that moves close to the OPC photoreceptor and attracts and delivers a carrier by a magnetic force, and a predetermined electric potential is applied to generate an electric field from a non-image region of the electrostatic latent image to the removing roller.

## Description

### Technical Field

The present invention relates to an electrographic printing apparatus, an electrographic printing method, and a method of producing a glass plate.

### Background Art

Known electrographic printing apparatuses irradiate a uniformly charged photoreceptor with light from a light source, such as a laser or a light emitting diode (LED), to form an electrostatic latent image on the photoreceptor by neutralizing image regions that are irradiated with light and forms an image by adhering toner, which is charged to the same polarity as the photoreceptor, to the image regions.
A two-component development method is known as a method of adhering toner to a photoreceptor. The two-component development method is a method of transferring a toner (particle size of 6 to 20 µm), which is adhered to the surface of a carrier, onto a photoreceptor by rubbing the surface of the photoreceptor with a magnetic brush formed of the carrier, which consists of magnetic particles (particle size of 40 to 120 µm). The magnetic brush is formed on a development roller, made of a multipole magnet, by a magnetic force. A developer obtained by mixing the carrier and the toner at a predetermined ratio is applied to the entire surface of a magnet roller. A gap formed by a restricting blade regulates the amount of developer being applied at a constant rate. The developer is supplied through a nip between the photoreceptor and the development roller and is rubbed onto the photoreceptor.
At this time, an electrostatic latent image corresponding to image data is formed on the photoreceptor; in the image region, the toner is detached from the carrier and adheres to the photoreceptor by an electrostatic force that is generated by a potential difference with respect to the charged toner; and, in the non-image region, a repulsive force prevents the toner from adhering to the photoreceptor. In this way, a toner image (image) is formed corresponding to the electrostatic latent image on the photoreceptor.
Patent Document 1:
   Publication of Japanese Patent No. 2517188
Patent Document 2:
   Japanese Examined Patent Application, Publication No. HEI-3-30136

### Disclosure of Invention

However, the carrier rubs against the photoreceptor or the carrier rubs against another carrier in the developing region. Therefore, the toner adhered to the surface of the carrier by an electrostatic force detaches from the carrier, or a toner not having a sufficient electrostatic force detaches from the carrier, and so-called "base fogging" occurs, in which the toner also adheres to the non-image region of the photoreceptor.
For usual printed material, "base fogging" is acceptable so long as it is not visibly noticeable. However, when forming a conductive pattern for an industrial product, base fogging is not acceptable even when it is not visibly noticeable because it is likely to cause a decrease in performance, such as the generation of electric noise and a decrease in the voltage tolerance. Thus, it is necessary to prevent base fogging, even at a level that is not visibly noticeable.

However, there is a problem in that it is difficult to completely avoid the generation of base fogging at all with the current two-component development method based on the above-described principle.
There are other development methods, such as a one-component development method and non-contact jumping development. However, with these methods, too, base fogging occurs because toner is supplied to and contacts the non-image regions on the photoreceptor.

An object of the present invention is to provide an electrographic printing apparatus, an electrographic printing method, and a method of producing a glass plate that can prevent base fogging, prevent a decrease in performance, such as the generation of electric noise and a decrease in the voltage tolerance, and provide high-quality printed materials.

To solve the problems described above, the present invention provides the following solutions.
A first aspect of the present invention provides an electrographic printing apparatus including a photoreceptor to which a developing device adheres a charged toner to an image region of an electrostatic latent image formed on a moving surface; and a non-image-region toner removing unit disposed downstream of the developing device in a moving direction of the surface of the photoreceptor and at a position opposing the photoreceptor, wherein the non-image-region toner removing unit includes a supporting body that moves close to the photoreceptor and attracts and delivers a carrier by a magnetic force, and a predetermined electric potential is applied to generate an electric field from a non-image region of the electrostatic latent image to the supporting body.

According to this aspect, the supporting body in the non-image-region toner removing unit moves while attracting the carrier by a magnetic force in a shape like the ears of rice plants. Since the supporting body is provided near the photoreceptor, the tips of the carrier ears contact the surface of the photoreceptor and rub the toner present at the surface of the photoreceptor. The rubbed toner can easily move.
At this time, since an electric field from the non-image region of the electrostatic latent image toward the supporting body is generated by the predetermined voltage applied to the supporting body, the easily movable toner in the non-image region is moved toward the supporting body by the electric field.
In this way, since the toner in the non-image region, which may cause base fogging, is separated and collected by the non-image-region toner removing unit, base fogging can be prevented and high-quality printed material can be provided.
Here, "carrier" is a magnetic powder made of a material containing a magnetic material.

In the above-described aspect, the predetermined electric potential applied to the supporting body may be between an electric potential applied to the non-image region of the electrostatic latent image and an electric potential applied to the image region.

The photoreceptor and the toner adhered thereto are generally charged negatively, and the electric potential is lower (the negative value is smaller) in the image region to be neutralized compared with the non-image region. The negatively charged toner receives the force of the electric field from the region where the negative electric potential is high toward the region where the negative electric potential is low.
According to above-described configuration, since the predetermined electric potential applied to the supporting body is between an electric potential applied to the non-image region of the electrostatic latent image and an electric potential applied to the image region, the acting force of the electric field from the non-image region toward the supporting body is applied to the non-image region, whereas an electric field from the supporting body toward the image region is applied to the image region.
Since the toner in the non-image region is attracted toward the supporting body by the acting force of the electric field, base fogging of printed material is prevented, and high quality can be maintained.
Since the toner in the image region is strongly attracted toward the photoreceptor, even when the carrier comes into contact therewith, the toner is prevented from being rubbed off by the carrier.

In the above-described aspect, a magnetic head for forming a magnetic latent image on the supporting body may be provided in the non-image-region toner removing unit, and the magnetic head may form a magnetic latent image corresponding to the non-image region of the electrostatic latent image.

According to this configuration, since a magnetic latent image that corresponds to the non-image region of the electrostatic latent image is formed on the supporting body, a magnetic force is generated in a region corresponding to the non-image region of the electrostatic latent image.
Since the carrier is attracted to the region corresponding to the non-image region of the electrostatic latent image and is not attracted to the region corresponding to the image region, the carrier acts upon the toner adhered to the non-image region but does not act upon the toner adhered to the image region.
Therefore, the toner adhered to the non-image region is collected, but the toner adhered to the image region is prevented from eroding.
Since the carrier contacts only the non-image region, the electric potential applied to the supporting body can be set without taking into consideration the electric potential of the image region. Therefore, since the electric potential to be applied to the supporting body can be set to a negative electric potential that is lower than that that of the image region or to a positive electric potential, the force attracting the toner in the non-image region toward the supporting body can be increased.

In the above-described aspect, the non-image-region toner removing unit may include a carrier circulation line for collecting the carrier and supplying the carrier again and a toner separating device for separating the toner collected from the photoreceptor disposed midway in the carrier circulation line.

According to this configuration, the toner collected from the photoreceptor by the toner separating device is separated from the carrier when the carrier is circulated via the carrier circulation line.
Since the collected toner is separated in this way, the toner is prevented from accumulating in the carrier that is repeatedly used.
Accordingly, since hardly any of the toner adheres to the carrier that comes in contact with the photoreceptor, the toner is prevented from adhering to the photoreceptor again.

In the above-described aspect, the non-image-region toner removing unit may have a charging member that charges the carrier to a polarity opposite to that of the toner.

According to this configuration, since the carrier is charged to a polarity opposite to that of the toner by the charging member, an electric force for attracting the toner adhered to the surface of the photoreceptor is maintained.
Since this strongly effects the intensely charged toner adhered to the non-image region, the ability to remove the toner adhered to the non-image region is improved even more.

In the above-described aspect, the carrier in the non-image-region toner removing unit may attract and deliver particles that have the same polarity as that of the toner and are made of a different material.
Moreover, in the above-described aspect, the supporting body may have a speed difference relative to the photoreceptor.
Moreover, in the above-described aspect, an alternating voltage may be applied to the non-image-region toner removing unit.

According to these configurations, since the carrier attracts and delivers particles that have the same polarity and a different composition as the toner, the surface of the carrier is prevented from directly contacting the surface of the photoreceptor.
In this way, since the surface of the carrier does not directly contact the surface of the photoreceptor, even in an area of the non-image region without the toner, which is charged most strongly, the electrostatic force is prevented from becoming stronger than the magnetic force of the supporting body.
Therefore, the carrier can be effectively prevented from adhering to the surface of the photoreceptor.

A second aspect of the present invention provides an electrographic printing method for forming an image by forming an electrostatic latent image on a moving surface of a photoreceptor and adhering a charged toner to an image region of the electrostatic latent image with a developing device, the method including the steps of applying a predetermined electric potential to a non-image-region toner removing unit having a supporting body that moves close to the photoreceptor at a position downstream of the developing device in a moving direction of the surface of the photoreceptor; and removing the toner adhered to a non-image region of the electrostatic latent image with a carrier attracted to the supporting body by a magnetic force.

According to this aspect, the supporting body in the non-image-region toner removing unit moves while attracting the carrier by a magnetic force in a shape like the ears of rice plants. Since the supporting body is provided near the photoreceptor, the tips of the carrier ears contact the surface of the photoreceptor and rub the toner present on the surface of the photoreceptor. The rubbed toner becomes easily movable.
At this time, since an acting force directed from the non-image region of the electrostatic latent image to the supporting body due to the predetermined voltage applied to the supporting body, the easily movable toner in the non-image region moves toward the supporting body by the acting force of the electric field.
In this way, since the toner in the non-image region, which may cause base fogging, is separated and collected by the non-image-region toner removing unit, base fogging of the printed material can be prevented and high-quality printed materials can be provided.

A third aspect of the present invention provides a method of producing a glass plate, the method including a step of recording a magnetic latent image on a surface of a magnetic drum; a step of adhering a carrier onto the magnetic latent image; and a step of removing the toner on a non-image region of the photoreceptor by moving the carrier on the magnetic drum close to the photoreceptor at a position further downstream than the developing device.
A fourth aspect of the present invention provides a method of producing a glass plate, the method including a step of adhering a carrier to a supporting body for removing the toner adhered to the photoreceptor; and a step of removing the toner on a non-image region on the photoreceptor by moving the carrier on the supporting body close to the photoreceptor at a position further downstream than the developing device.

According to the third and fourth aspects, since the toner in the non-image region of the photoreceptor is removed by the carrier on the magnetic drum, a glass plate with an image that does not have base fogging can be obtained.
In this way, since a glass plate with an image that does not have base fogging can be obtained, a high-quality product with a smaller decrease in performance, such as the generation of electric noise and a decrease in the voltage tolerance, is obtained, particularly when an electric circuit is formed by a conductive pattern.

According to the present invention, since the toner in the non-image region is removed, base fogging can be prevented, and high printing quality without a decrease in performance, such as the generation of electric noise and a decrease in the voltage tolerance, can be achieved.
By applying a predetermined voltage to the developer removing drum, the toner is attracted toward the carrier by the potential difference in the non-image region, and the toner strongly adheres to the supporting body in the image region. In this way, high quality printing can be achieved.

### Brief Description of Drawings

[FIG. 1] Fig. 1 illustrates, in outline, an electrographic printing apparatus according to a first embodiment of the present invention.
[FIG. 2] Fig. 2 illustrates, in outline, a cross section of a toner removing device shown in Fig. 1.
[FIG. 3] Fig. 3 is a lateral sectional view illustrating the inner structure of a removing roller shown in Fig. 1.
[FIG. 4] Fig. 4 is a longitudinal sectional view illustrating the structure of the removing roller shown in Fig. 1.
[FIG. 5] Fig. 5 is a side view illustrating the structure of a bearing section of the removing roller shown in Fig. 1.
[FIG. 6] Fig. 6 illustrates the distribution of a magnetic field generated around the removing roller shown in Fig. 1.
[FIG. 7] Fig. 7 illustrates, in outline, a toner separating device shown in Fig. 1.
[FIG. 8] Fig. 8 illustrates a magnetic brush formed on a magnetic drum shown in Fig. 1.
[FIG. 9] Fig. 9 illustrates the magnetic brush attracting toner adhered to a non-image region of an OPC photoreceptor.
[FIG. 10] Fig. 10 illustrates, in outline, an electrographic printing apparatus according to a second embodiment of the present invention.
[FIG. 11] Fig. 11 illustrates a magnetic brush formed on a magnetic drum shown in Fig. 10.
[FIG. 12] Fig. 12 illustrates the magnetic brush attracting toner adhered to a non-image region of an OPC photoreceptor.

### Explanation of Reference Signs:

- 3:: OPC photoreceptor (supporting body)
- 5:: developing device
- 100:: non-image-region toner removing device
- 101:: carrier collecting device
- 102:: main body of removing device
- 103:: toner separating device
- 113:: removing roller

### Best Mode for Carrying Out the Invention

Embodiments of the present invention will be described below with reference to the drawings.

### First Embodiment

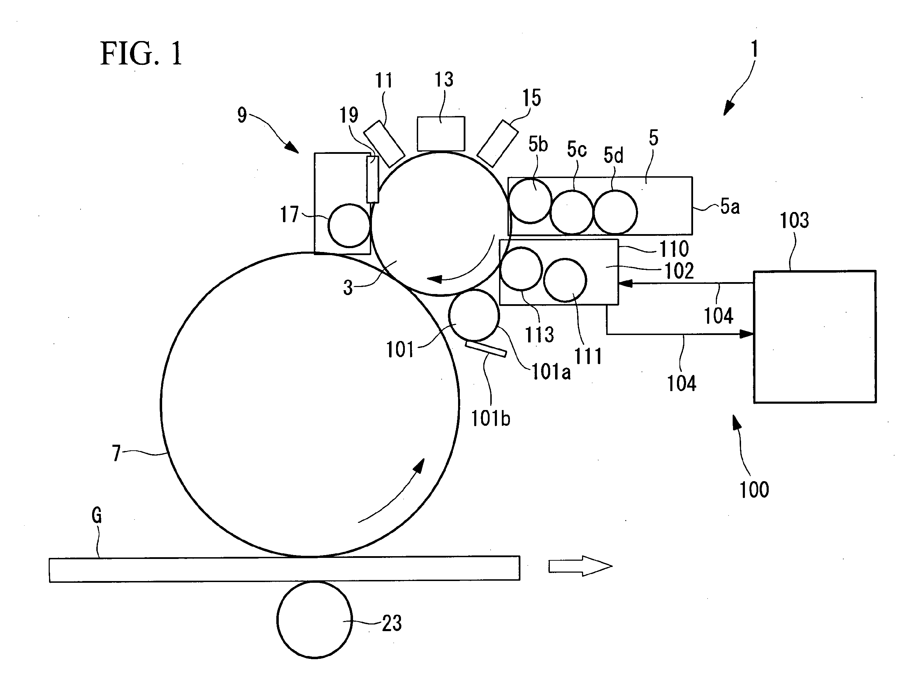

An electrographic printing apparatus according to a first embodiment of the present invention will be described below with reference to Figs. 1 to 9.
Fig. 1 illustrates, in outline, the electrographic printing apparatus according to this embodiment.
As shown in Fig. 1, an electrographic printing apparatus 1 is mainly formed of an organic photoconducting (OPC) photoreceptor (photoreceptor) 3 that forms an image by selectively attracting a toner; a developing device 5 that supplies the toner, included in a developer containing the toner and a carrier, to the OPC photoreceptor 3; an intermediate body 7 that transfers the toner attracted to the OPC photoreceptor 3 onto a glass plate G; and a non-image-region toner removing device 100.

The electrographic printing apparatus 1 of this embodiment described below is employed to form a prescribed pattern of metal wires on the glass plate G.
The toner used in this embodiment is made by finely pulverizing a mixture of resin, silver powder, and glass powder. The resin may be, for example, a styrene resin or a styrene-acrylic resin and may have a pulverized particle diameter of approximately 10 to 20 µm. It is preferable that a charging agent be mixed with the toner. The glass powder functions as an adhesive for fixing the toner to the glass plate G.
The carrier comprises a magnetic material and is formed by coating ferromagnetic cores, made of, for example, ferrite or iron, with resin. The coating material is, for example, an acrylic coating material. The two-component developer used in this embodiment contains approximately 6 wt% of toner relative to the carrier. The toner and the carrier are bonded by an electrostatic force.

The OPC photoreceptor 3 is formed in a substantially cylindrical shape and is disposed such that it is rotationally driven around its center axis. Around the OPC photoreceptor 3 in the rotational direction from the area opposing the intermediate body 7, there are provided a cleaning device 9, a neutralizing device 11, a charging device 13, an exposure device 15, the above-mentioned developing device 5, the non-image-region toner removing device (a non-image-region toner removing unit) 100, and a carrier collecting device 101.

The charging device 13 comprises a corona discharger, such as a scorotron. The charging device 13 charges the entire circumferential surface of the OPC photoreceptor 3 with negative electrostatic charge in order to charge the OPC photoreceptor 3 to a predetermined negative potential, e.g., approximately -1,000 V.

The exposure device 15 comprises LEDs (light emitting diodes) arranged in the center axis direction of the OPC photoreceptor 3; the LEDs are arranged so that the circumferential surface of the OPC photoreceptor 3 is irradiated with the light emitted from the LEDs. The light emitted from the LEDs is controlled according to an image signal so as to form a prescribed image.
An image is formed by a potential difference caused by the negative charge being neutralized in the regions of the OPC photoreceptor 3 irradiated with the light.

The developing device 5 comprises a casing 5a, a magnet roller 5b including a multipole magnet, and stirring/delivering rollers 5c and 5d including screw blades and contains a developer that is a mixture including predetermined fractions of toner and carrier.
By stirring and delivering the developer, the toner adheres, by an electrostatic force, to the surface of the carrier that is negatively charged by a friction-induced charge generated between the toner and the carrier. The magnet roller 5b holds the carrier to which the toner is adhered with the magnetic force and delivers the toner to a development region opposing the circumferential surface of the OPC photoreceptor 3 by rotation.

The cleaning device 9 comprises a fur brush 17 and a blade 19 that remove the toner remaining on the circumferential surface of the OPC photoreceptor 3. The fur brush 17 is made of fur and formed to scrape off the remaining toner with the fur. The blade 19 is formed of a plate-shaped resilient material, such as rubber, and is positioned in such a manner that it rubs off the remaining toner.

The neutralizing device 11 is composed of LEDs aligned in the direction of the center axis of the OPC photoreceptor 3 and is disposed in a manner such that the entire circumferential surface of the OPC photoreceptor 3 is irradiated with the light emitted from the LEDs.
The image formed by the potential difference remaining on the OPC photoreceptor 3 after the toner is transferred can be erased by irradiating the entire circumferential surface with light.

The carrier collecting device 101 is a device that magnetically attracts the carrier adhered to the photosensitive surface. In the carrier collecting device 101, a magnet roller 101a is disposed such that it does not contact the OPC photoreceptor 3. The carrier attracted to the magnet roller 101a is scraped off by a cleaner blade 101b.
A voltage that repels the toner on the OPC photoreceptor 3 is applied to the magnet roller 101a. In this way, the toner transferred onto the image regions on the OPC photoreceptor 3 (hereinafter, this toner may be referred to as "image region toner") is prevented from degrading.

The intermediate body 7 is disposed substantially parallel to the OPC photoreceptor (supporting body) 3 and is a drum-shaped rotary body supported in such a manner as to rotate around the center axis. The carrier collecting device 101 and a roller 23 are provided on the intermediate body 7 along the rotating direction from a position opposing the OPC photoreceptor 3, and the glass plate G on which the toner is transferred is interposed between the roller 23 and the intermediate body 7.

The carrier collecting device 101 provided on the intermediate body 7 is the same as that provided on the OPC photoreceptor 3. A voltage that repels the toner on the intermediate body 7 is applied to the magnet roller. In this way, the image region toner transferred onto the intermediate body 7 is prevented from degrading.

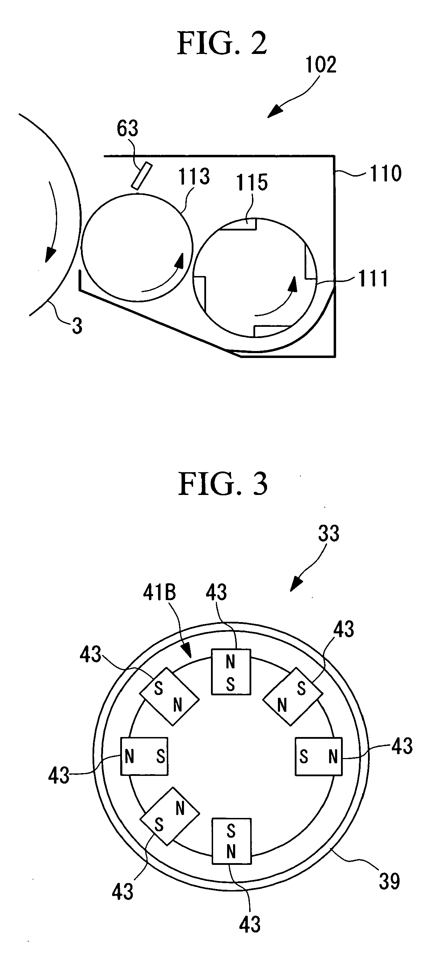

Next, the detailed structure of the non-image-region toner removing device 100 will be described.
As shown in Fig. 1, the non-image-region toner removing device 100 includes a main body 102 of the removing device and a toner separating device 103 that collects the carrier from the main body 102.
The main body 102 is mainly formed of a casing 110, a stirring/delivering roller 111, and a toner removing roller (supporting body) 113.
The stirring/delivering roller 111 supplies the carrier inside the casing 110 to the toner removing roller 113; an example thereof may be a roller having a spiral screw blade (not shown) or a roller having depressions 115 (see Fig. 2) that are L-shaped in a cross-sectional view formed at equal intervals around the circumference. The depressions 115 extend along the center axis of the delivery roller.

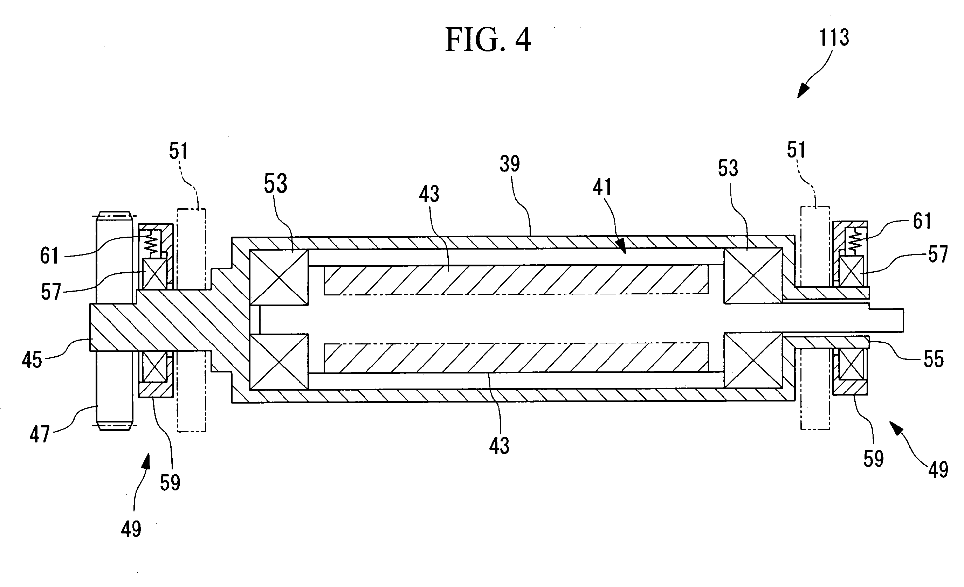

Fig. 3 is a lateral cross-sectional view illustrating the inner structure of the toner removing roller 113. Fig. 4 is a longitudinal cross-sectional view illustrating the structure of the toner removing roller 113.
The toner removing roller 113 is disposed inside the casing 110 and is interposed between the stirring/delivering roller 111 and the OPC photoreceptor 3. The stirring/delivering roller 111 and the toner removing roller 113 are disposed with a predetermined gap therebetween. It is preferable that the predetermined gap be between 1 and 10 mm.
As shown in Fig. 3, the toner removing roller 113 is mainly formed of a substantially cylindrical sleeve 39 disposed on the outer circumference and a magnetism generating unit 41 disposed inside the sleeve.
A predetermined negative voltage, for example, approximately -800 V is applied to the sleeve 39.

As shown in Fig. 4, a shaft portion 45 is formed on one end of the sleeve 39. The shaft portion 45 is provided with a gear 47 that rotationally drives the sleeve 39, bearing portions 49 that support the sleeve 39 in a rotatable manner, and a restricting portion 51 that restricts the distance to the OPC photoreceptor 3.
Bearings 53 that support the magnetism generating unit 41 in such a manner that it is rotatable around the sleeve 39 are provided inside the cylindrical portion of the sleeve 39.
A cylindrical portion 55 having a diameter smaller than the center portion is formed on the other end of the sleeve 39. The cylindrical portion 55 is provided with the bearing portions 49 that support the sleeve 39 in a rotatable manner and the restricting portion 51 that restricts the distance to the OPC photoreceptor 3.
The gear 47 is formed such that it receives the rotational driving force transmitted from a driving unit (not shown).

The restricting portion 51 is a disk-shaped member. The outer diameter of the restricting portion 51 is larger than the outer diameter of the sleeve 39. The distance between the toner removing roller 113 and the OPC photoreceptor 3 is maintained constant by contacting the restricting portion 51 with the OPC photoreceptor 3.

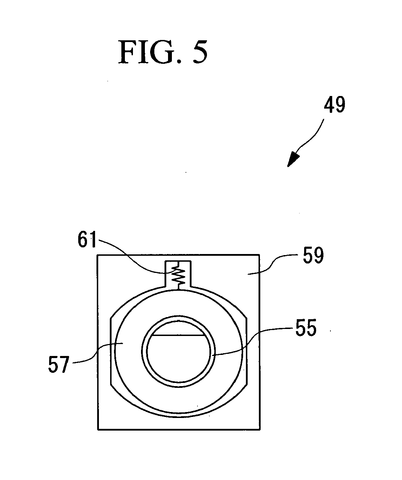

Fig. 5 is a side view illustrating the structure of the bearing portions 49.
As shown in Figs. 4 and 5, the bearing portions 49 are mainly formed of bearings 57 that support the shaft portion 45 or the cylindrical portion 55 of the sleeve 39 in a rotatable manner, supporting members 59 that support the bearings 57 in a movable manner, and springs 61 that urge the bearings 57 toward the OPC photoreceptor 3.
The supporting members 59 support the bearings 57 in a manner such as to move the bearings 57 closer to or away from the OPC photoreceptor 3 (in the vertical direction in Fig. 5). Each spring 61 is interposed between the bearing 57 and the supporting member 59 and is disposed opposite to the OPC photoreceptor 3.

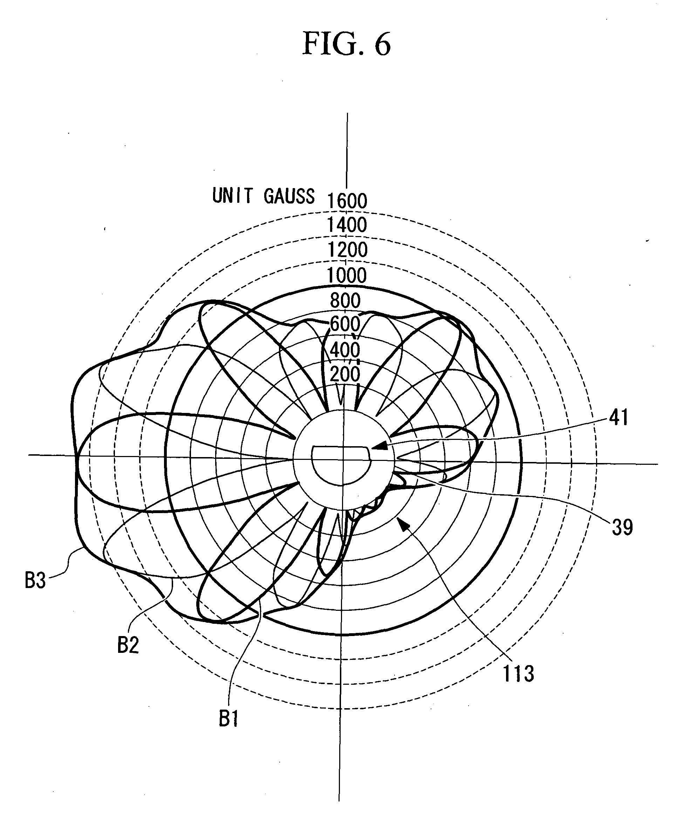

Fig. 6 illustrates the distribution of a magnetic field generated around the toner removing roller 113.
A plurality of permanent magnets 43 are disposed in the magnetism generating unit 41 to generate a magnetic field having a distribution shown in Fig. 6.
Line B1 in the drawing is a line indicating the intensity of the normal component of the magnetic field; line B2 is a line indicating the intensity of the tangential component of the magnetic field; and line B3 is a line indicating a combination of the normal component and the tangential component.
As shown in Fig. 3, the plurality of permanent magnets 43 are disposed in the magnetism generating unit 41 from substantially the 6-o'clock position to substantially the 3-o'clock position via the 12-o'clock position of the magnetism generating unit 41. Therefore, as shown by line B3 in Fig. 6, a magnetic field is also generated such that it is distributed from substantially the 6-o'clock position to substantially the 3-o'clock position of the toner removing roller 113 (only a weak magnetic field is generated between substantially the 3-o'clock position and substantially the 6-o'clock position).
In Fig. 6, the stirring/delivering roller 111 is disposed at substantially the 3-o'clock position, and the OPC photoreceptor 3 is disposed at substantially the 9-o'clock position.

As shown in Fig. 2, a nap-height restricting blade 63 that restricts the height of the attracted carrier is provided above the toner removing roller 113.
The nap-height restricting blade 63 is formed of a plate-shaped member and is disposed a predetermined distance, for example, approximately 0.9 mm, away from the toner removing roller 113.

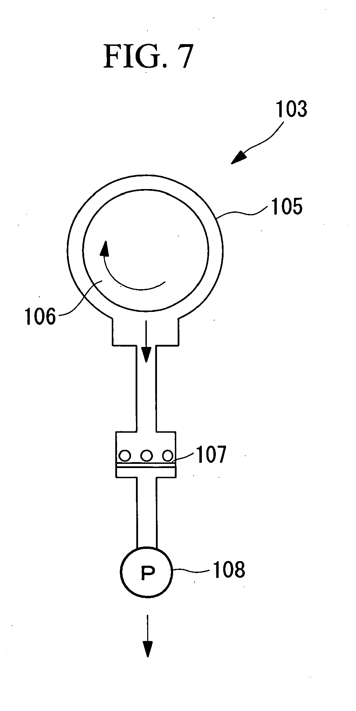

The toner separating device 103 is a device that is disposed midway in a carrier circulation line 104, which receives the carrier from the casing 110 and returns the carrier to the casing 110, and that separates the toner from the collected carrier. The collected toner may be reused.
As shown in Fig. 7, the toner separating device 103 includes a mesh drum 106 (which is part of the carrier circulation line 104), which is provided inside a sleeve 105 in such a manner as to be rotatable, a toner collecting filter 107, and a vacuum pump 108.
A spiral guide (not shown) is provided inside the mesh drum 106. A mixture of the toner and the carrier collected from the main body 102 is supplied through an opening at one end of the spiral guide in the axial direction and moves toward the other end as the mesh drum 106 rotates. When the mixture moves, the toner having a small particle size passes through a mesh provided in the circumferential wall of the mesh drum 106 by the suction force of the vacuum pump 108 and is collected at the toner collecting filter 107. The carrier moves to the other end inside the mesh drum 106. The collected toner is reused, and the carrier is returned to the main body 102 of the removing device.

Next, the operation of the electrographic printing apparatus 1 having the above-described configuration will be described.
An electric potential of approximately -1,000 V is applied to the circumferential surface of the OPC photoreceptor 3 by the charging device 13. Subsequently, the circumferential surface at approximately -1,000 V is irradiated with light emitted from the exposure device 15. The electric potential in the region of the circumferential surface irradiated with light is reduced; and the electric potential in that region is reduced to approximately -150 V. Light emitted from the exposure device 15 is controlled on the basis of an image signal sent from a control device (not shown in the drawings) so as to form a predetermined image on the OPC photoreceptor 3. Therefore, an electrostatic latent image that is formed by the potential difference is formed on the cylindrical surface of the OPC photoreceptor 3.

Toner from a developing roller 5b of the developing device 5 adheres to the electrostatic latent image due to the potential difference. In other words, since the electric potential at the cylindrical surface of the OPC photoreceptor 3 is approximately -1,000 V, the electric potential at the electrostatic latent image is approximately -150 V, and the electric potential at the developing roller 33B is approximately -800 V, the negatively charged toner only adheres to the electrostatic latent image.

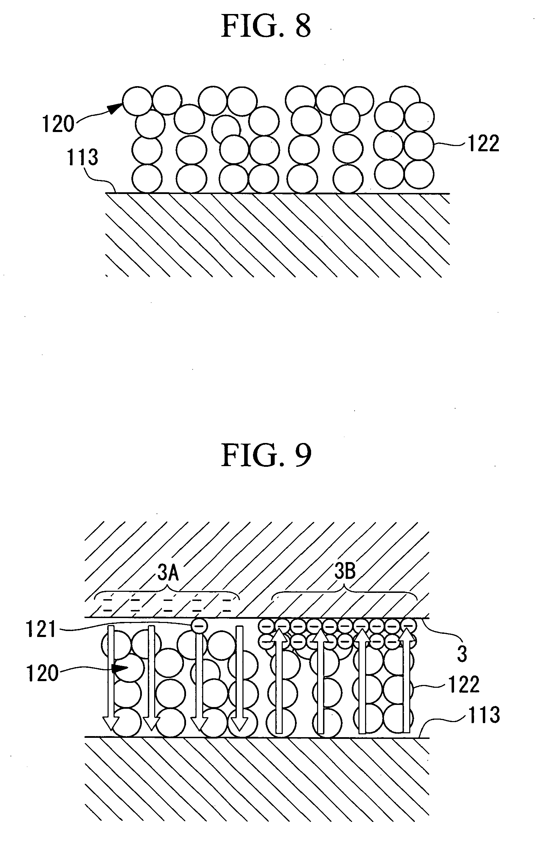

However, toner that is only weakly charged is detached from the image regions of the OPC photoreceptor 3, and some of that toner adheres to the non-image regions. In this embodiment, toner on the non-image regions is removed by the non-image-region toner removing device 100, as described below.
In other words, the carrier inside the casing 110 adheres to the toner removing roller 113 by the stirring/delivering roller 111 included in the main body 102 of the non-image-region toner removing device 100. This state is illustrated in Fig. 8. As shown in the drawing, a carrier 122 is overlaid on the entire surface of the toner removing roller 113 to form a magnetic brush 120.
The magnetic brush 120 contacts the surface of the OPC photoreceptor 3 as the OPC photoreceptor 3 and the toner removing roller 113 rotate and rubs toner 121 on a non-image region 3A to make the toner 121 easily movable.
A difference in the speed of the surface of the OPC photoreceptor 3 and the magnetic brush 120 causes the magnetic brush 120 to collide with the toner in the non-image region to generate a mechanical acting force that causes the toner to easily detach.
At this time, the mechanical friction between the carrier 122 and the toner 121 charges the toner 121 in the non-image region 3A; for example, the toner 121 that is attached to the non-image region due to a weak charge can be charged to a predetermined charge level.

At this time, an electric potential between those of the non-image region 3A of the OPC photoreceptor 3 and an image region 3B is applied to the toner removing roller 113. Therefore, as shown in Fig. 9, an acting force due to an electric field from the non-image region 3A to the toner removing roller 113 is applied at the non-image region 3A, and an acting force due to an electric field from the toner removing roller 113 to the image region 3B is applied at the image region 3B.
The toner 121 is electrically attracted by an acting force to the magnetic brush 120 at the non-image region 3A and is collected in the casing 110 together with the carrier 122. On the other hand, at the image region 3B, the force that adheres the toner to the OPC photoreceptor 3 is strengthened.

There is a possibility that the carrier may slightly adhere to the OPC photoreceptor 3 together with the toner. As a countermeasure, the carrier is removed by the carrier collecting device 101. The removed carrier is the carrier that was adhered to the OPC photoreceptor 3 as a result of the magnetic force of the developing roller 5b or the toner removing roller 113 becoming weaker than the electrostatic force. Therefore, by setting the magnetic force of the magnet roller 101a greater than that of the developing roller 5b or the toner removing roller 113 or by reducing the distance between the magnet roller 101a and the OPC photoreceptor 3, the magnetic force acting upon the carrier is increased, and the carrier adhered to the OPC photoreceptor 3 can be attracted thereto.
Moreover, by applying the above-mentioned predetermined voltage to the magnet roller 101a, the negatively charged toner 121 in the image region is pushed toward the OPC photoreceptor 3.

Then, the toner adhered to the latent image on the OPC photoreceptor 3 is delivered to the region opposing the intermediate body 7 by the rotation of the OPC photoreceptor 3. In this region, the negatively charged toner provided on the OPC photoreceptor 3 is transferred onto the intermediate body 7.

After the toner is transferred from the OPC photoreceptor 3, the remaining toner that is not transferred is removed by the cleaning device 9. More specifically, the remaining toner is scraped off by the fur brush 17, and then further rubbed off by the blade 19. Then, the latent image remaining on the OPC photoreceptor 3 is erased by the neutralizing device 11.

The toner transferred onto the glass plate G is heated and calcined in post-processing and is fixed to the glass plate G with glass powder functioning as an adhesive. Since the toner contains conductive silver powder, for example, wires for defogging can be formed on the glass plate G by transferring a predetermined toner pattern.

Since the toner 121 collected by the toner removing roller 113 is separated from the carrier 122 by the toner separating device 103, the toner 121 can be prevented from accumulating on the carrier 122, which is repeatedly used.
In this way, since hardly any of the toner 121 adheres to the carrier 122, which contacts the OPC photoreceptor 3, the toner 121 can be prevented from adhering to the OPC photoreceptor 3 again.

According to this embodiment, since the toner adhered to non-image regions can be removed by the non-image-region toner removing device 100, high-quality printing is achieved by preventing base fogging.
By applying a predetermined electric potential to the toner removing roller 113, toner on the non-image region 3A of the OPC photoreceptor 3 can be removed and the adhesive force of the toner in the image region 3B can be improved. In this way, high-quality printing is achieved.

In this embodiment, the OPC photoreceptor 3 and the toner removing roller 113 rotate (the surfaces move) in the same direction at opposing positions. However, the rotating direction is not limited thereto. For example, the OPC photoreceptor 3 and the toner removing roller 113 may rotate (the surfaces move) in opposite directions.
In this way, the toner 121 is pushed upstream in the rotating direction of the OPC photoreceptor 3 by the magnetic brush 120.
Therefore, for example, even when the toner 121 in the image region 3B is pushed by the magnetic brush 120 and moves to the upstream non-image region 3A, the portion that moved moves to a position opposing the OPC photoreceptor 3 and the toner removing roller 113 again. Therefore, there is a possibility that the toner 121 is removed by contacting the carrier adhered to the toner removing roller 113.
The appropriate above-described methods to be used should be selected according to various conditions, such as the development method, the type of developer to be used (carrier and toner), and the rotating speed.

If necessary, the carrier in the non-image-region toner removing device 100 may be positively charged (opposite polarity to that of the toner adhered to the OPC photoreceptor 3).
In such a case, it is effective to use a charge-producing member that charges the carrier to a polarity opposite to the toner in a region contacting the carrier. For example, the inner surface of the casing 110, the stirring/delivering roller 111, the carrier circulation line 104, and the mesh drum 106 inside the toner separating device 103 may be formed with a charge-producing material.
The charge-producing member may be produced of a material that is more negative, in a triboelectric series, than the carrier comprising the coating material may be selected. For example, polytetrafluoroethylene, vinyl chloride, and so on are appropriate as the carrier comprising the acrylic coating material, which is exemplified in this embodiment. The device is formed of these materials, or the surface thereof is coated.

In this way, since the carrier is charged to the opposite polarity of the toner by the charging member, an electric force that attracts the toner adhered to the surface of the OPC photoreceptor 3 can be maintained.
In particular, since this is effective for intensely charged toner adhered to the non-image region, the ability to remove the toner adhered to the non-image region is improved even more.

If the carrier is positively charged, the carrier may be attracted to the OPC photoreceptor 3, in particular, the non-image region, by an electrostatic force.
To prevent this, it is effective to adhere toner-like particles to the carrier so that the surface of the carrier that is positively charged does not directly come into contact with the surface of the OPC photoreceptor 3.
For example, this can be realized by combining a toner concentration sensor (not shown) and a toner delivering device (not shown) that are used in a known two-component developing device.

Since there is a possibility that the particles adhered to the carrier adhere to the OPC photoreceptor 3, causing base fogging, a material that has a composition different from printing toner is used.
For example, when a conductive pattern is formed of toner on glass, the toner has a composition in which the toner is formed by coating a metal material and a glass material with resin. In such a case, the particles to be adhered to the carrier are formed only of a resin component. In this way, even when the particles adhere to the glass serving as the final product, it is burnt away in the heating and firing process, and a decrease in quality due to base fogging can be prevented.

### Second Embodiment

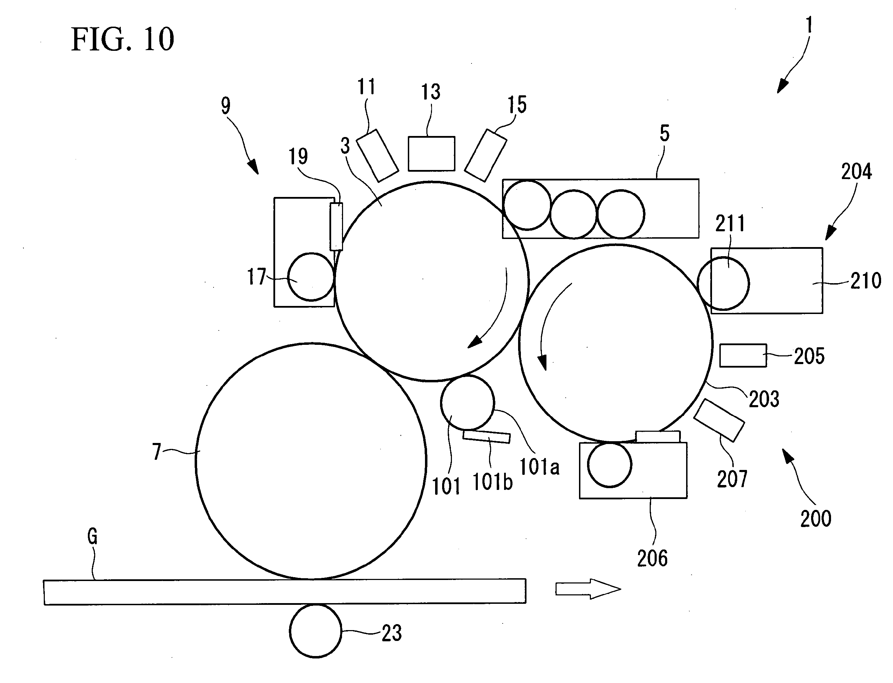

Next, a second embodiment of the present invention will be described with reference to Figs. 10 to 12.
The basic configuration of this embodiment is the same as that of the first embodiment, except that the configuration of the non-image-region toner removing device 100 differs. Therefore, in this embodiment, only this difference is described, and descriptions of other parts are not repeated.
Components that are the same as those in the first embodiment are represented by the same reference numerals, and detailed descriptions thereof are not repeated.
Fig. 10 illustrates, in outline, an electrographic printing apparatus according to the second embodiment.

As shown in Fig. 10, a non-image-region toner removing device (non-image-region toner removing unit) 200 includes a magnetic drum (supporting body) 203, a carrier delivering device 204, a magnetic head 205, a carrier cleaner 206, and a demagnetizing head 207.
The magnetic drum 203 is substantially cylindrical and is disposed substantially parallel to the OPC photoreceptor 3, with a gap therebetween. The magnetic drum 203 is supported in such a manner that it is rotatable around the center axis and rotates at the same speed as the OPC photoreceptor 3.
The carrier cleaner 206, the demagnetizing head 207, the magnetic head 205, and the carrier delivering device 204 are provided in this order from a position opposing the OPC photoreceptor 3 in the rotating direction of the magnetic drum 203.

A magnetic recording medium is provided on the surface of the magnetic drum 203. A known material may be used as the magnetic recording medium. In particular, thin films of γ-Fe₂O₃ containing Co, γ-Fe₂O₃, Cr02, or Co-Ni may be used.
The magnetic head 205 is a head that forms a magnetic latent image on the magnetic recording medium. The magnetic head 205 has a core and a coil (not shown) and magnetizes a recording medium on the magnetic drum 203 by generating a magnetic field corresponding to the polarity of the electric current applied to the coil.

The carrier delivering device 204 includes a casing 210 and a developing roller 211. The developing roller 211 is long enough to oppose the entire longitudinal side of the magnetic drum 203 and is a substantially cylindrical magnet roller disposed substantially parallel to the magnetic drum 203. A carrier which is the same as the carrier of the two-component developer is stored inside the casing 210. The carrier inside the casing 210 adheres to the magnetic latent image on the magnetic drum 203 as the developing roller 211 rotates around the center axis so as to form a magnetic brush 120.

The carrier cleaner 206 is a device that removes the carrier adhered to the surface of the magnetic drum 203. The carrier cleaner 206 rubs off the carrier with a brush and a blade.
The demagnetizing head 207 erases the magnetic latent image recorded on the magnetic recording medium on the surface of the magnetic drum 203. An exemplary demagnetizing head 207 includes a permanent magnet or includes a core and a coil, as in the magnetic head, and is used by applying an electric current to the coil.

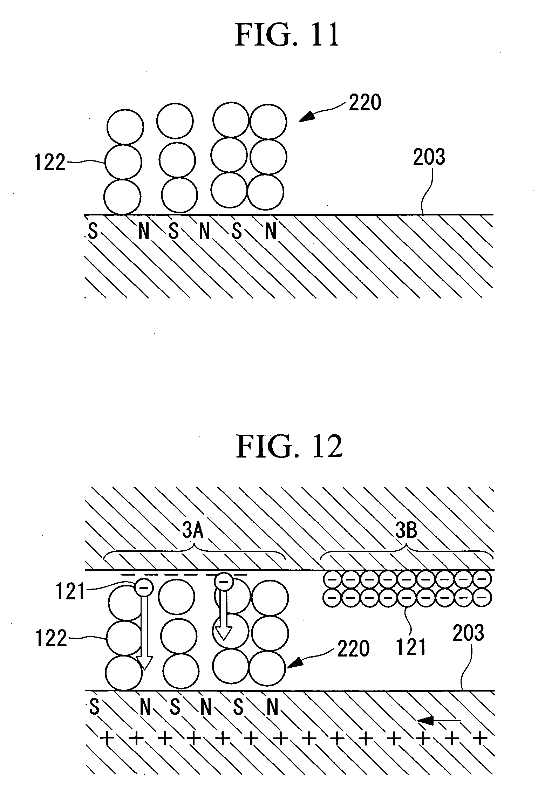

The non-image-region toner removing device 200 of this embodiment, having such a configuration, removes the toner on the non-image region as described below.
The magnetic drum 203 rotates at the same speed as (in synchronization with) the OPC photoreceptor 3. A magnetic latent image is recorded on the magnetic recording medium on the surface layer of the magnetic drum 203 by the magnetic head 205. The magnetic latent image corresponds to the non-image region 3A of the electrostatic latent image formed on the OPC photoreceptor 3.
Then, the carrier is delivered to the surface of the magnetic drum 203 by the carrier delivering device 204. A carrier 122 is attracted by the magnetic force of the magnetic latent image and adheres to the magnetic latent image to form the magnetic brush 120 shown in Fig. 11. The magnetic brush 120 is formed only in the area corresponding to the non-image region of the OPC photoreceptor 3 and is not formed in the area corresponding to the image region.

A negative electric potential that is lower than -1,000 V, which is the electric potential of the non-image region of the OPC photoreceptor 3, or a positive electric potential is applied to the magnetic drum 203. An acting force due to an electric field from the non-image region 3A to the magnetic drum 203, which is indicated by an arrow in Fig. 12, is applied to the toner in the non-image region.
Therefore, as the magnetic drum 203 rotates, the magnetic brush 120 moves close to the OPC photoreceptor 3 and rubs the surface of the corresponding non-image region 3A on the OPC photoreceptor 3, as shown in Fig. 12. As a result, excess toner 121 adhered to the non-image region of the OPC photoreceptor 3 becomes easily movable.
Thus, the toner 121 is attracted toward the magnetic brush 120 by the electric field and is removed from the surface of the OPC photoreceptor 3.

In this way, since the magnetic brush 220 does not contact the image region 3B of the OPC photoreceptor 3, the toner 121 adhered to the image region 3B can be prevented from eroding.
Since the carrier contacts only the toner 121 in the non-image region 3A, the electric potential applied to the magnetic drum 203 can be set freely without taking into consideration the electric potential of the image region 3B. Accordingly, since the electric potential to be applied to the magnetic drum 203 can be set to a negative potential lower than that of the image region 3B, as described above, or a positive potential, the force that attracts the toner 121 in the non-image region 3A to the magnetic drum 203 can be increased compared to that according to the first embodiment.

An alternating voltage may be applied to the magnetic drum 203. In this way, the toner is shaken by an acting force due to a large pulsed electric field generated between the magnetic drum 203 and the non-image region 3A to promote its separation from the OPC photoreceptor 3.

Then, the toner is delivered to the carrier cleaner 206 by the rotation of the magnetic drum 203. The carrier 122 is scraped off by a blade. The magnetic latent image on the magnetic drum 203 from which the carrier is removed is erased by the demagnetizing head 207.
The toner 121 is collected and separated from the removed carrier 122 at the toner separating device 103, in such a manner similar to that in the first embodiment, and the carrier 122 returns to the casing 210 of the carrier delivering device 204.
Instead of continuously circulating the carrier 122 in this way, the step of separating the toner from the carrier and the step of returning the carrier to the casing 210 may be separated.

Also in this embodiment, similar to the first embodiment, the carrier in the non-image-region toner removing device 200 may be positively charged (charged to a polarity opposite to the toner adhered to the OPC photoreceptor 3).
In the case of this embodiment, the carrier is attracted only to the magnetic latent image on the magnetic drum 203 corresponding to the non-image region 3A of the OPC photoreceptor 3. This is preferable since the toner in the image region 3B is not affected.

Moreover, in this case, to prevent the carrier from being attracted to the non-image region on the OPC photoreceptor 3 by an electrostatic force, particles similar to the toner may be adhered to the carrier so that the surface of the positively charged carrier does not come into direct contact with the surface of the OPC photoreceptor 3.

The scope of the present invention is not limited to the above-described embodiments, and various modifications may be made within the scope of the present invention.
For example, in the configuration according the above-described embodiments, toner containing silver powder is transferred onto a glass plate. However, the configuration is not limited thereto, and toner containing various other materials may be transferred onto another material.

## Claims

1. An electrographic printing apparatus comprising:
a photoreceptor to which a developing device adheres a charged toner to an image region of an electrostatic latent image formed on a moving surface; and
a non-image-region toner removing unit disposed downstream of the developing device in a moving direction of the surface of the photoreceptor and at a position opposing the photoreceptor,
wherein the non-image-region toner removing unit includes a supporting body that moves close to the photoreceptor and attracts and delivers a carrier by a magnetic force, and a predetermined electric potential is applied to generate an electric field from a non-image region of the electrostatic latent image to the supporting body.

2. The electrographic printing apparatus according to Claim 1, wherein the predetermined electric potential applied to the supporting body is between an electric potential applied to the non-image region of the electrostatic latent image and an electric potential applied to the image region.

3. The electrographic printing apparatus according to Claim 1, wherein a magnetic head for forming a magnetic latent image on the supporting body is provided in the non-image-region toner removing unit, and the magnetic head forms a magnetic latent image corresponding to the non-image region of the electrostatic latent image.

4. The electrographic printing apparatus according to one of Claims 1 to 3, wherein the non-image-region toner removing unit includes a carrier circulation line for collecting the carrier and supplying the carrier again and a toner separating device for separating the toner collected from the photoreceptor disposed midway in the carrier circulation line.

5. The electrographic printing apparatus according to one of Claims 1 to 4, wherein the non-image-region toner removing unit has a charging member that charges the carrier to a polarity opposite to that of the toner.

6. The electrographic printing apparatus according to one of Claims 1 to 5, wherein the carrier in the non-image-region toner removing unit delivers particles that have the same polarity as that of the toner and are made of a different material.

7. The electrographic printing apparatus according to one of Claims 1 to 6, wherein the supporting body has a speed difference relative to the photoreceptor.

8. The electrographic printing apparatus according to one of Claims 1 to 7, wherein an alternating voltage is applied to the non-image-region toner removing unit.

9. An electrographic printing method for forming an image by forming an electrostatic latent image on a moving surface of a photoreceptor and adhering a charged toner to an image region of the electrostatic latent image with a developing device, the method comprising the steps of:
applying a predetermined electric potential to a non-image-region toner removing unit having a supporting body that moves close to the photoreceptor at a position downstream of the developing device in a moving direction of the surface of the photoreceptor; and
removing the toner adhered to a non-image region of the electrostatic latent image with a carrier attracted to the supporting body by a magnetic force.

10. A method of producing a glass plate on which a pattern is formed by an electrographic printing apparatus for forming an image by forming an electrostatic latent image on a moving surface of a photoreceptor and adhering a charged toner to an image region of the electrostatic latent image with a developing device, the method comprising:
a step of recording a magnetic latent image on a surface of a magnetic drum;
a step of adhering a carrier onto the magnetic latent image; and
a step of removing the toner on a non-image region of the photoreceptor by moving the carrier on the magnetic drum close to the photoreceptor at a position further downstream than the developing device.

11. A method of producing a glass plate on which a pattern is formed by an electrographic printing apparatus for forming an image by forming an electrostatic latent image on a moving surface of a photoreceptor and adhering a charged toner to an image region of the electrostatic latent image with a developing device, the method comprising:
a step of adhering a carrier to a supporting body for removing the toner adhered to the photoreceptor; and
a step of removing the toner on a non-image region on the photoreceptor by moving the carrier on the supporting body close to the photoreceptor at a position further downstream than the developing device.
